# EUROPEAN PATENT SPECIFICATION

(11) **EP 0 343 271 B1**
(45) Date of publication and mention of the grant of the patent: **09.03.1994**
(21) Application number: 88108433.9
(22) Date of filing: 26.05.1988
(51) Int. Cl.: B60N 3/04

(54) **Light weight floor mat with retainer means**
Leichtgebaute Fussbodenmatte mit Rückhaltemitteln
Tapis de plancher de peu de poids avec moyens de retenue

(43) Date of publication of application: 29.11.1989
(73) Proprietor: The 2500 Corporation, Farmington Hills, Michigan 48018 (US)
(72) Inventor: Altus, Mark, Huntington Woods Michigan 48070 (US)
(74) Representative: Strehl Schübel-Hopf Groening & Partner

(56) References cited:
- DE-U- 8 624 125
- US-A- 361 610
- US-A- 4 758 457

## Description

The present invention relates to floor mats for use in passenger carrying vehicles, and more particularly to various light weight floor mats intended for use in automotive type vehicles. The improvements disclosed in the present application relate to a floor mat with integral retainer means which is much lighter than previous floor mats by virtue of its construction, but still is able to prevent movement of the floor mat when used in a motor vehicle, and to a floor mat having a single sided retainer attached thereto.

A review of the prior art involving automotive floor mats will show that there are three main areas of concern to the designers of such products. These are the need to cut costs due to ever increasing price pressures on automotive suppliers, the need to continually cut the weight of automotive floor mats due to the pressure on auto makers to improve fuel economy; and the need, while cutting price and weight, to effectively retain the floor mat on the automotive carpet. The efforts of myself and others employed by Applicant's assignee show the tremendous amount of work that has been put forth in this field. These efforts started as early as March of 1980, and resulted in the issuance of United States Patent No. 4,361,610, continued with the filing of Application Serial No. 06/444,986, and culminated with the issuance of United States Patent No. 4,588,628. The floor mat disclosed and claimed in United States Patent No. 4,588,628, is a double sided floor mat with detachable, rotateable, retainer means of a particular construction which is very effective in retaining such a floor mat on an automotive carpet.

However, such floor mats have proven to be rather heavy, and rather expensive to manufacture. It was thought that one of the varieties of floor mats claimed in said United States Patents would suffice if further reductions in weight were made. This is the floor mat which is claimed with carpeting on only one side. However, even though there was a saving in weight, the solution was unsatisfactory. When the bottom of the floor mat construction does not have carpeting on it, it is typically made of rubber or some other type slippery material, and the retainer, being of a polyethylene construction, is also smooth. Since the fit of the mounting means, which consists of tabs on the retainer and loops on the carpet, is loose, when someone enters the vehicle the carpet tends to slide on the retainer for a short distance before reaching the limits of the travel permitted by the hinges. When this limit of travel is reached, the carpet abruptly stops moving and causes buckling of the carpet and/or places stress on the tabs and hinges, which, in time, can result in the breaking of the tabs and/or hinges of the floor mat. Thus, in addition to giving an annoying slipping feeling to the passenger when he was first entering the vehicle, it also results in a shortened life of the retainer, and these problems were unacceptable in the automotive industry.

EP-A-0 311 736, which was published after the filing date of the present patent and is therefore only relevant for the question of novelty, discloses a floor mat construction including a retainer, wherein this retainer is separable from the carpeting.

German Utility Model DE-U-8 624 125 discloses a floor mat construction, wherein downwardly extending protrusions are fitted to a synthetic layer of the mat. This has the disadvantage that only a few types of synthetic materials are suitable for this type of construction and the manufacturing is rather complicated. Further, the protrusions are shaped as cones, which has the disadvantage that the floor mat may move on the nap of the vehicle's carpet due to vibrations and forces which act on the floor in use.

Thus, it is an object of the invention to provide an improved light weight floor mat which will remain in place during operation of a motor vehicle, which is easily removable and replaceable on the floor mat of a vehicle and which is simplified in construction and is lower in manufacturing costs than previous automotive floor mats. Further, it is an object to provide for the use of a lighter weight carpet by virtue of the opportunity to eliminate the bottom layer of synthetic material found on normal carpets. It is a still further object of the invention to prevent buckling of the carpet portion of the mat due to slippage between the retainer and the carpet.

These objects are achieved according to the present invention as defined in claim 1. Further objects and advantages of the invention will be apparent from the following description and the dependent claims,
reference being made to the accompanying drawings forming a part of this specification, wherein like reference characters designate corresponding parts in the several views.

### Brief Description Of The Drawings

Figure 1 is an exploded perspective view of a floor mat construction showing one embodiment of the present invention.
Figure 2 is partial perspective view of the construction shown in Figure 1 when assembled.
Figure 3 is a sectional view, taken in the direction of the arrows, along the section line 3-3 of Figure 2.
Figure 4 is an exploded perspective view showing a modified construction embodying the present invention.
Figure 5 is a partial perspective view showing the floor mat construction of Figure 4 in its assembled conditions.
Figure 6 is a sectional view, taken in the direction of the arrows, along the section line 6-6 of Figure 5.
Figure 7 is an enlarged view of a portion of Figure 6.
Figure 8 is a view similar in large part to Figure 3, but representative of several other means of attaching the edge binding to the carpet and retainer such as heat sealing, sonic welding or adhesive bonding.
Figure 9 is a sectional view, taken in the direction of the arrows, along the section line 9-9 of Figure 4.
Figure 10 is a modification of the construction shown in Figure 9.
Figure 11 is a view in large part similar to Figure 6, showing the carpet riveted in place.
Figure 12 is a view similar in large part to Figure 3, showing the edge binding riveted in place.
Figure 13 is a perspective view, partially cut away, of the construction shown in Figure 1 applied to a rear floor mat.
Figure 14 is an exploded perspective view, partially cut away, showing the constructin of Figure 4 applied to a rear floor mat.
Figure 15 is a perspective view of a front floor mat made according to the construction shown in Figure 1 or Figure 4 with the bristles removed where the floor mat is to cover a heel pad found in automotive carpeting.
Figure 16 is a perspective view, partially broken away, showing a floor mat embodying a modification of the present invention, and having the retainer mounted to the underside thereof toward the rear of said floor mat.
Figure 17 is a sectional view taken in direction of the arrows, along the section line 17-17 of Figure 16.
Figure 18 is a perspective view showing a modification of the present invention wherein the retainer is mounted proximate the middle of the floor mat, and has a saw tooth portion on the front of said retainer.
Figure 19 is a sectional view, taken in the direction of the arrows, along the section line 19-19 of Figure 18.
Figure 20 is a perspective view of a further modification of the present invention wherein an enlarged retainer, covering the underside of substantially the entire floor mat except where it is to contact the toe board of an automobile, is provided.
Figure 21 is a sectional view, taken in the direction of the arrows, along the Section line 21-21 of Figure 20.
Figure 22 is a sectional view, taken in the direction of the arrows, along the Section line 22-22 of Figure 21.
Figure 23 is a view, similar in large part to Figure 22, except showing the saw tooth portion of the retainer projecting downwardly of the planar surface portion thereof.
Figure 24 is a perspective view of a modification of the present invention showing the retainer covering the entire underside of the floor mat.
Figure 25 is a perspective view, similar in large part to Figure 18, but showing a modified means of mounting the retainer of the present invention to the floor mat.

It is to be understood that the present invention is not limited to the details of construction and arrangement of parts illustrated in the accompanying drawings, since the invention is capable of other embodiments. It is to be understood that the phraseology and terminology employed herein is for the purpose of the description, and not of limitation.

### Description Of The Preferred Embodiments

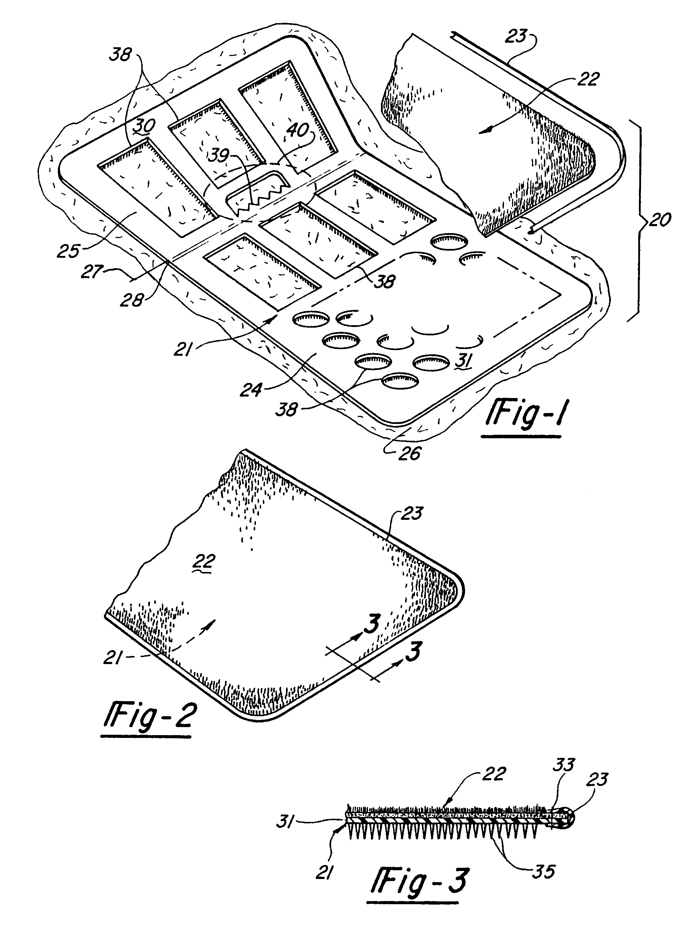

Referring now to Figures 1-3, there is shown one embodiment of the present invention. There is shown in Figure 1 an automotive floor mat generally designated by the numeral 20, which includes a retainer, generally designated by the numeral 21, a piece of carpet generally designated by the numeral 22, and an edge binding 23.

The retainer 21 consists of two portions, the heel portion 24, so named because this is the portion on which the occupants heel rests during operation of a motor vehicle, and the toe portion 25, so named because it is the portion which rests up against the toe board of the automobile. Of course, in the modern day automobile, the toe board or toe pan is covered with automotive carpet 26, as is the floor pan, on which the heel portion of the retainer rests. In order to facilitate conforming to the shape of the floor pan and toe pan of the automobile, the retainer 21 may be formed with a crease along the toe line 27. To facilitate this, a living hinge 28 may be provided, or other means well known in the art may be used.

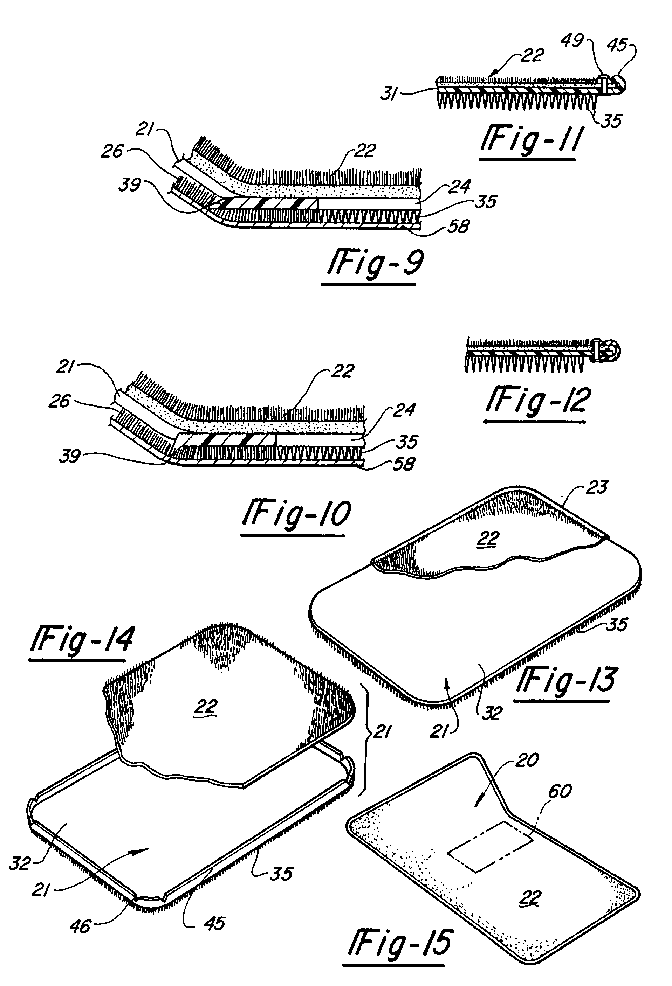

Whether or not a living hinge 28, or other type of hinge means are provided along the toe line 27, the retainer 21 will consist of a toe portion 25 having a first planar surface 30 with bristles 35 downwardly depending therefrom to form a lower bristled surface. The heel portion 24 will consist of a second planar surface 31 having bristles 35 depending downwardly therefrom. Of course, if the floor mat construction is intended to be used on a flat surface, such as will be discussed later concerning Figures 13 and 14, only a single planar surface will be present.

In the construction shown in Figures 1-3, a piece of automotive carpet 22, substantially identical in size to the retainer 21, is placed thereon, with an edge binding 23 placed about the entire perimeter and stitched in place to bind the carpet 22, the retainer 21, and the edge binding 23 to each other. The stitching, used thread well known in the automotive art, is shown at 33. It can be seen that the lower bristled surface of the heel portion 24 of the retainer 20 is formed by bristled 35 depending downwardly from the second planar surface 31.

It should be understood that it is possible to attach the edge binding 23 to the carpet 22 and the retainer 21, in a wide variety of ways. Figure 8, for example, is representative of the use of heat sealing, sonic welding or adhesive bonding to bind the construction together. Figure 12 shows riveting the edge binding 23 to the carpet 22 and retainer 21. As can be seen, any practicable method can be used.

The length and sharpness of the bristles are a matter to be selected by experimentation depending on the particular application to which the floor mat is to be put. For example, if the floor mat 20 is to be used in an automotive vehicle with a loop pile carpeting, the loop pile gives a better grab, and shorter and/or duller bristles are permissable. If cut pile carpet is to be used, the bristles should be sharper, with the sharpness of the bristles in this case being more important than the length. Also, the shape of the particular automotive floor pan and toe pan will have a bearing on the selection of bristles, and the lower bristled surface of either the heel portion 24, or the toe portion 25, or both, may have a portion of the lower bristled surface tapered if necessary.

If a mat is to be of rather large size, the bristles should be longer and sharper for more gripping, while a small mat does not need as long a bristle. Regardless of the particular application to which the floor mat is to be put, the bristles 35 forming the lower bristled surface should be no longer than 1/2 to 3/4 of the length of the nap of the automotive carpet 26 found in the vehicle.

In certain applications, it has been found desirable to place a saw tooth portion 39 proximate the front edge of the heel portion of the retainer to prevent the retainer 21 from riding up on the toe pan of the motor vehicle. In this case the bristles are removed from an area 40 around the saw tooth portion 39 to make the saw tooth portion effective, and a floor mat 20 having a saw tooth portion on the retainer will have the bristles removed proximate the saw tooth portion 39 as well as proximate the fastening means such as the edge binding 23. It is to be noted that a plurality of mass reduction openings 38 are provided in both the heel portion 24 and the toe portion 25 of the retainer 21. The amount of area which can be removed by these mass reduction openings again depends on the particular application to which the floor mat 20 is to be put. It has been found that the lower bristled surface should comprise from 1/3 to 100% of the area covered by the retainer depending on application, to give satisfactory retention.

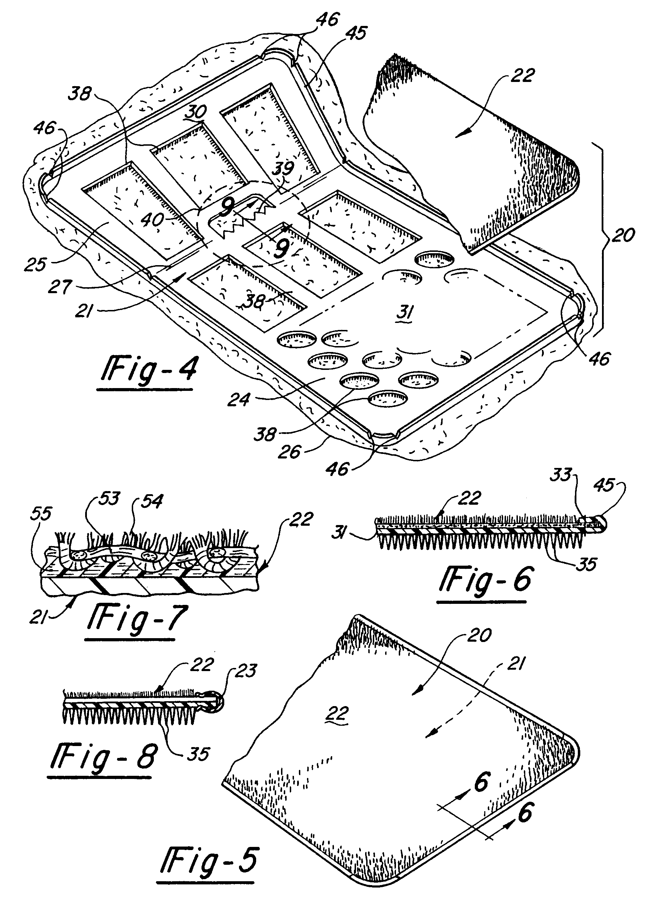

A modification of my invention is shown in Figure 4. The construction shown in Figure 4 is similar in many respects to that shown in Figure 1. A retainer, generally designated by the numeral 21, is provided, to which is attached a piece of carpet 22 of substantially the same size as the retainer. The retainer again has a toe portion 25, and a heel portion 24, separated by a (real or imaginary) toe line 27, which again may have a living hinge or other hinge means provided there along to facilitate the floor mat 20 conforming to the shape of the floor pan of the automobile, thus, again separating the retainer into a first planar surface 30, and a second planar surface 31. If the retainer is to be used on a flat surface, the first planar surface 30 and the second planar surface 31 would merge into a single planar surface 32. As before, mass reduction openings 38 may be provided, as can the saw tooth portion 39. Again, the bristles 35 forming the lower bristle surface will depend downwardly from the second planar surface 31 of the heel portion 24 of the retainer 21, and from the first planar surface 30 of the toe portion 25 of the retainer. The bristles will not be found proximate the saw tooth portion 39, or the integral fastening means 42, which will now be described.

The integral fastening means 42 found in this modification of my invention comprises a lip 45 formed substantially continously around the perimeter of the retainer 21 and depending upwardly from the first planar surface 30 and the second planar surface 31. The lip 45 is continuous except for a plurality of forming breaks 46 which allow the lip to be folded over onto the top of the planar surfaces 31 and 32 to securely hold the carpet 22 in place as showing in Figure 6. The lip 45 may be folded down approximately 90 degrees to hold the carpet 22 in place, and may be aided by means of stitching 33. A heat seal (not shown) may also be used or, as shown in Figure 11, a rivet type construction may be used whereby rivets 49 are passed through the lip 45 and the heel portion 24 of the floor mat 21 to securely hold the carpet 22 in place. As before, any practicable method of attachment may be used.

Having now explained the basic construction of my floor mat 20, it can now be understood why a large weight savings is possible. While I have thus far illustrated my invention using a conventional piece of automotive carpet 22, and by conventional I mean one having a scrim layer 53 into which are tufted a plurality of loops which are then severed to form the upwardly extending severed loops 54, with these loops then bound to the scrim layer 53 by a bonding layer 55, and then having a latex (or similar) layer (not shown) placed on the back thereof to give the carpet anti-slip properties and durability. By reference to Figure 7, it can be seen that the carpet 22 is now made in a manner which has the scrim layer 53 with the upwardly extending severed loops 54 locked in place with a bonding layer 55, but there is a notable absence of the latex layer. This is because the latex layer is no longer needed for durability, since the bonding layer 55 will directly contact the retainer 21, nor is the latex layer needed to give the carpet non-skid properties, because it no longer contacts the automotive carpet 26 directly.

The significant weight saving in this embodiment of my invention comes from the fact that the latex layer which is eliminated is a heavy rubber construction which weighs substantially more than the entire retainer 21 which is made of a polyethylene, or similar plastic material, which is very light weight. It is estimated that for an average front set of floor mats the saving in weight can be as much as a 1-1/2 pounds, and for a full set of four floor mats, the weight saving using the construction of the present invention can be as high as two pounds, thus making a significant weight savings over present retainers, and keeping the weight of the entire set of retainers under 3 pounds, which means it does not have to be counted in the weight of the car for EPA fuel economy purposes. This is a significant advance in the automotive floor mat art. While conventional carpet can be used in my construction, in the preferred embodiment, the carpet 22 will not have the latex layer to give the benefit of the weight saving.

Referring now to Figures 9 and 10, the importance of the saw tooth portion 39 of the retainer 21 can been seen. Proximate the front edge of the heel portion 24 of the retainer 21 is a saw tooth portion 39 which, in Figure 9, is planar with the heel portion 24 of the retainer. If the floor mat 20 tries to ride up the carpet 26 which is on top of the floor pan 58, the saw tooth portion 39 will dig into the carpet 26, blocking the lifting of the retainer. This saw tooth portion 39 may be planar with the heel portion 24, or as shown in Figure 10, may extend downwardly therefrom.

Referring now to Figures 13 and 14, there are shown the constructions shown in Figures 1 and 4 respectively adapted for use in rear floor mats. In this situation, for purposes of illustration, there will be a single planar surface 32 having bristles depending downwardly therefrom except proximate the fastening means, which in this illustration take the form of edge binding 23, which secures the carpet 22 to the retainer 21. In Figure 14, there is shown a retainer 21 having a single planar surface 32 having a lip 45 depending upwardly therefrom, and the bristles 35 forming the lower bristled surface depending downwardly therefrom. The carpet 22 is inserted into the retainer 21, the lip 45 is folded over approximately 90 degrees as previously described in connection with the construction shown in Figure 4, and the lip, if desired, is fastened to the floor mat construction by stitching, heat sealing, riveting, or the like to form the improved floor mat of the present construction.

Referring now to Figure 15, it has been found in some automobiles having large vinyl heel pads sewn into the automotive carpet proximate the accelerator that, if bristles are provided over the vinyl heel pad, slippage could occur. Figure 15 shows a floor mat made according in the present invention, and having the lower bristled surface removed from the area enclosed by the phantom line 60, which has been found to solve the slippage problem.

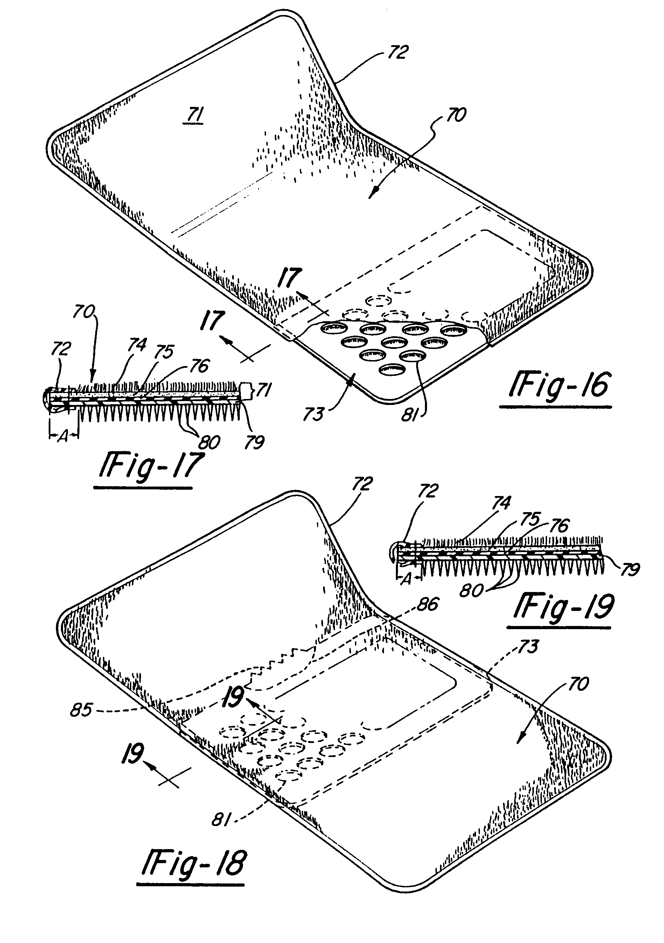

Referring now to Figures 16 and 17, there is shown a floor mat embodying a further modification of the present invention. The floor mat, generally designated by the numeral 70, consists of a piece of conventional carpet 71 having edge binding 72 applied about the periphery thereof, and having retainer 73 fixedly attached thereto. The carpeting 71 is a conventional carpet having a plurality of upwardly extending loops 74, whether severed or not, tufted into a scrim layer and bonded thereto by a layer of tuftlock, indicated by the numeral 75, and backed by a layer of latex 76 to provide a non-skid surface. This layer of latex (or of any other materials over the tuftlock) is optional. The retainer, generally designated by the numeral 73, has a planar surface 79 with a plurality of bristles 80 downwardly depending from the underside thereof, the top of the planar surface 79 being flat.

As before, the shape and length of the bristles depend on several factors, and must be chosen for each specific automotive application.

The design of the bristles also depends on the type of pile of the automotive carpet. A loop pile gives a better grab, and thus, a retainer used on this type of carpet can have shorter and/or duller bristles, while a cut pile carpet does not give as good a grip, and requires a longer and/or sharper bristles on the retainer.

Also, the manufacturing cost of the retainer portion of the floor mat is of some significance. In making the dyes to manufacture the retainer, it has been found that it is more expensive to make the bristles sharper than it is to make them longer, so this factor will also have to be considered in the design of the bristles. While long and sharp bristles will work in almost any application, consideration, of the above factors for each particular application will give the optimum design.

As shown in Figure 16, the retainer 73 may also have a plurality of mass reduction openings designated by the numeral 81. These openings may be of any practicable size and shape consistent with leaving enough surface area having bristles thereon to give sufficient retention to the retainer. It has been found by experimentation that one-third of the surface area of the bottom of the retainer is the minimum which can be covered by bristles and still provide the retainer with sufficient retention on the automotive carpet. The exact percentage, from one-third to one hundred percent of the surface area, depends on particular design considerations, and the size of the retainer with respect to the carpet, as discussed above. A loop carpet gives a better "grab", and a retainer for use on automobiles equipped with loop pile carpet could have more mass reduction openings 81, i.e., less of the surface covered with bristles and still perform properly, than could an automobile floor mat intended for use in a car with cut pile carpeting.

As shown in Figure 17, the retainer will have bristles on the underside thereof in all places except where the mass reduction openings 81 are, and proximate the fastening means. Referring to Figure 17, if the retainer 73 is mounted proximate the rear of the floor mat, and the retainer is intended to be secured to the conventional carpet 71 by the edge binding 72, the bristles on three sides of the retainer 81 will be set back from the edge thereof by a distance A, which is as required by the manufacturer's equipment.

It has been found in some cars, especially in the smaller cars, the the shape of the floor pan of the automobile makes the use of a retainer the size of that shown in Figure 16 much more preferable than the use of the full size retainer shown in Figure 20, as the shape of the floor will tend to raise one or more sides of the retainer 73 and give it a bulky effect. Also, it may be desireable to taper the bristles 80 on portions of the retainer 73 depending on the design of the floor pan. For example, the taper may be from the front to the back, or from one side to the other, of the retainer 73.

Further it has been found that the size of the automobile in which the floor mat 70 is to be used may govern the positioning of the retainer 73. While there are no general rules, and the best positioning will have to be determined by experimentation, it has been found in some instances that in smaller cars it is desirable to have the retainer positioned toward the rear of the mat 70, while in larger cars it is more desirable to have the retainer 73 placed proximate the middle of the floor mat 70, as shown in Figure 18. In this case, since the retainer 73 will not be bound to the edge binding 72 on the rear edge thereof, the bristles 80 are set back a distance A proximate only the sides of the floor mat 70, with bristles continuing to the back edge of the retainer 73, and forward to the front edge thereof.

In some instances, it has been found desirable to add a saw tooth portion 85 to the forward edge of the retainer 73 which will aid in retaining the floor mat on the automotive carpet by projecting forwardly into the automotive carpet where the toe pan meets the floor pan of the automobile. This saw tooth portion is illustrated as 85 in Figure 3, and if this modification is used, the bristles must be removed proximate the saw tooth portion 85 as indicated by the dotted line at 86 to avoid making the saw tooth portion ineffective.

It should be understood, of course, that with reference to Figures 17 and 19, in some circumstances it may be desired just to add the retainer 73 to an already existing piece of conventional carpet 71 having the edge binding 72 thereon. In this case, the retainer may be just stitched on in place over the edge binding 72 instead of under it. Also, if desired, if this procedure is followed, an additional piece of edge binding may be stitched in place over the retainer and the carpet only in the area of the retainer.

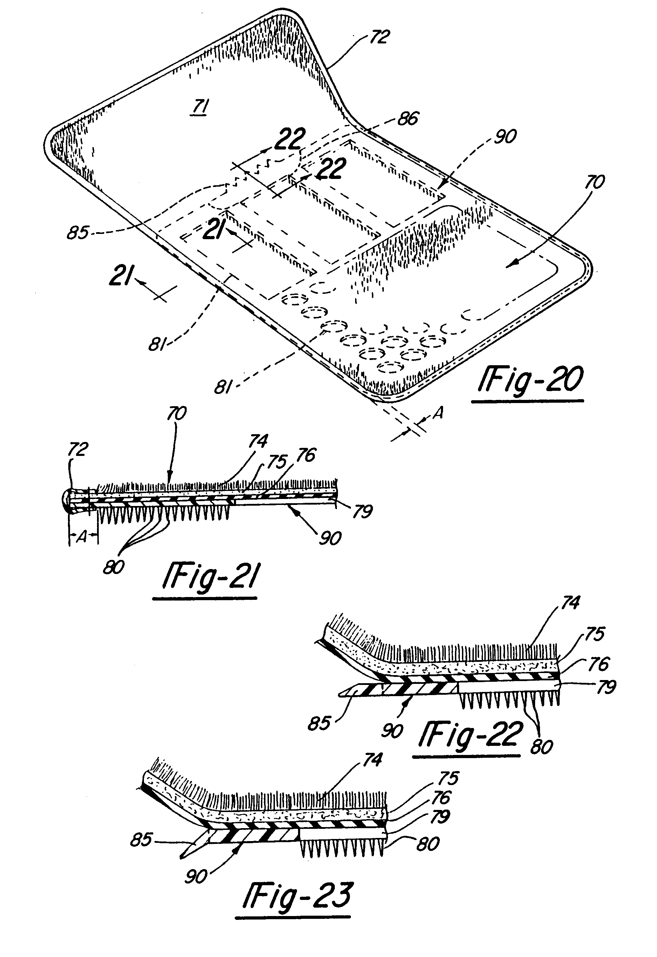

Now referring to Figures 20-23, there is shown a modification of my invention wherein the retainer covers approximately 2/3 of the underside of the floor mat 70. For ease of illustration, this retainer shall be generally designated by the numeral 90.

As before, the carpeting 71 used with the enlarged retainer 90 may be a conventional carpeting having a plurality of loops 74, whether severed or not, tufted into a scrim layer (not shown) and bonded in place with a bonding layer of tuftlock 75. To give the carpet 71 non-skid properties a layer of latex rubber 76 is applied to the bottom of the tuftlock layer. The enlarged retainer 90 may have a number of mass reduction openings 81 in various shapes and sizes to lighten its weight, as long as the aforementioned guidelines for the surface area of the retainer which must be covered by bristles are still met. As before, the bristles 80 are not placed proximate the fastening means for fastening the enlarged retainer 90 to the carpet 71. In this instance, in Figure 21, the edge binding 72 requires that the bristles be kept back from three edges of the enlarged retainer 90 for a distance A so that the fastening means, consisting of the edge binding 72, can be stitched, over the combination of the carpet and the retainer. If the carpeting 71 already had edge binding 72 applied thereto, the retainer could be just stitched in place over the edge binding, or an additional edge binding may be used to stitch the retainer in place. It should be understood that other fastening means, such as heat sealing, riveting or the like may also be used on this modification of my invention.

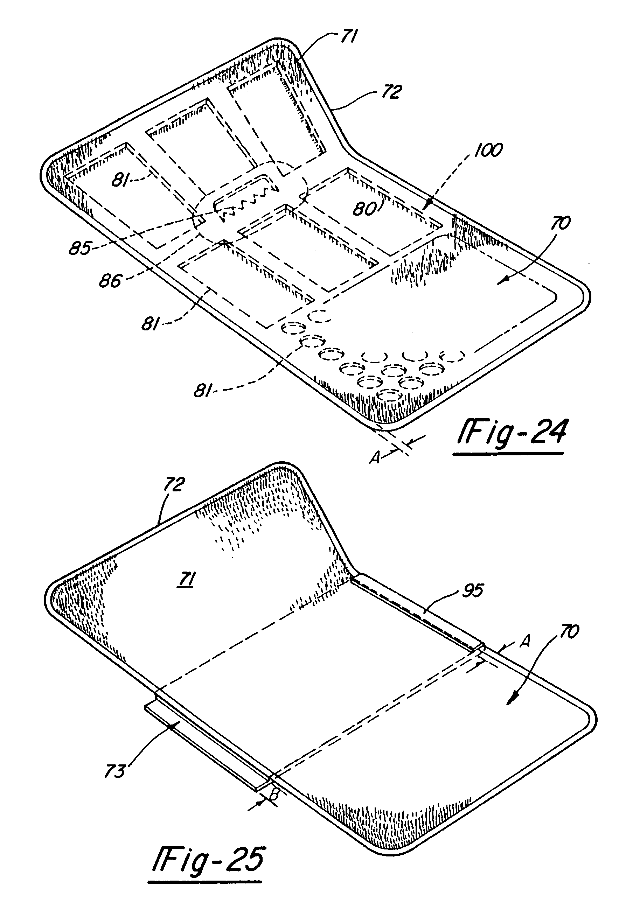

As in the modification of my invention shown in Figure 18, when the retainer reaches to the front of the portion of the floor mat 70 which will remain in contact with the floor pan of the automobile, a saw tooth portion 85 may be added. This saw tooth portion will dig in to the automotive carpet where the toe pan of the automobile meets the floor pan, and prevents any tendency of the floor mat to ride up on the toe pan. As shown in Figure 23, for additional gripping, the saw tooth portion 85 may extend downwardly from the planar surface 79 of the retainer.

The same considerations governing the surface area of the retainer which the bristles must cover, and thus the amount of mass reduction openings 81 which are allowed, apply to the enlarged retainer. The same considerations also apply to the length and sharpness of the bristles.

Under certain conditions, the floor mat 70 might have the retainer extending over the entire back of the carpet 71, and this is illustrated in Figure 24, where a full retainer, generally designated by the numeral 100, is fastened to the back of a piece of carpet 71 by means of a edge binding 72 in the manner previously described. As before, a plurality of mass reduction openings 81 may be provided in the full retainer 100 subject to the same conditions previously discussed. A saw tooth portion 85 may also be provided, providing the bristles are removed proximate the saw tooth portion as indicated by the dotted line labeled with the numberal 86. In this case the bristles 80 are set back proximate the edge of the full retainer 100 on all four sides thereof for a distance sufficient to allow the stitching of the edge binding entirely around the perimeter of said retainer. As before, the length and shape of the bristles will depend on the length and the size of the carpet on which the retainer is to be used, as well as the type of carpet.

A modified means for attaching any of the retainers thus far described is shown in Figure 25. For ease of illustration, I shall describe this modified means in connection with the retainer 73, although it may be used with the enlarged retainer 90, and the full retainer 100. This modification is particularly useful where it is desired to attach the retainer of the present invention to an already manufactured piece of carpet 71 having edge binding 72 about the entire periphery thereof. In this modification of my invention, the attachment means consists of an attachment flange 95 which extends past the edge of the edge binding 72 for a distance B. The distance B may be equal to the distance A by which the bristles may be set back from the edge of the retainer, and thus, in this modification, during manufacture the bristles will be set back from both edges of the retainer 73 for a distance of (A + B). The attachment flanges 95 are then folded over the edges of the carpet 71, and attached by any of the means just described such as stitching, heat sealing, riveting or the like, to fixedly mount the retainer 73 to the under side of the carpet 71.

While eliminating problems present in the prior art, a novel, lighter, less expensive, and more durable floor mat has been provided.

## Claims

1. A floor mat construction comprising a carpeting (22, 71) having a nap on at least one side thereof, a retainer (21, 73, 90) being secured to said carpeting (22, 71), whereby said retainer (21, 73, 90) and said carpeting (22, 71) are formed of separate and distinct materials, where by said retainer has downwardly projecting protrusions formed as bristles (35, 80), and said retainer (21, 73, 90) has fastening means (23, 45, 95) fixedly securing said carpeting to said retainer.

2. A floor mat as recited in claim 1, wherein said fastening means include an edge binding for securing said retainer to said carpeting.

3. A floor mat as recited in claim 1, wherein said retainer has a planar surface on said top side.

## Patentansprüche

1. Fußmattenaufbau umfassend ein Teppichgewebe (22, 71), das zumindest auf einer Seite einen Flor aufweist sowie eine Halterung (21, 73, 90), die am Teppichgewebe (22, 71) befestigt ist, wobei die Halterung (21, 73, 90) und das Teppichgewebe (22, 71) aus separaten und unterscheidlichen Materialien gebildet sind und die Halterung abwärtsgerichtet abstehende Vorsprünge aufweist, die als Borsten (35, 80) ausgebildet sind und die Halterung (21, 73, 90) Befestigungsmittel (23, 45, 95) umfaßt, um das Teppichgewebe an der Halterung fest anzubringen.

2. Fußmatte nach Anspruch 1, wobei die Befestigungsmittel eine Kanteneinfassung zur Anbringung der Halterung am Teppichgewebe umfassen.

3. Fußmatte nach Anspruch 1, wobei die Halterung eine planare Oberfläche auf der Oberseite aufweist.

## Revendications

1. Structure de tapis de sol comprenant un tapis (22, 71), possédant des poils sur l'un de ses côtés, un élément de retenue (21, 73, 90) étant fixé audit tapis (22, 71), ledit élément de retenue (21, 73, 90) et ledit tapis (22, 71) étant formés de matériaux séparés et distincts, ledit élément de retenue possédant des saillies dirigées vers le bas réalisées sous forme de soies (35, 80) et ledit élément de retenue (21, 73, 90) possédant des moyens de fixation (23, 45, 95) solidarisant ledit tapis audit élément de retenue.

2. Tapis de sol selon la revendication 1, dans lequel lesdits moyens de fixation comprennent une liaison de bord pour fixer ledit élément de retenue audit tapis.

3. Tapis de sol selon la revendication 1, dans lequel ledit élément de retenue possède une surface plane sur son côté supérieur.
